# EUROPEAN PATENT SPECIFICATION

(11) **EP 0 390 784 B1**
(45) Date of publication and mention of the grant of the patent: **14.02.1996**
(21) Application number: 88908647.6
(22) Date of filing: 30.09.1988
(51) Int. Cl.: F16C 17/10, F16C 23/04

(54) **SPLIT RACE BEARING ASSEMBLIES**
LAGERAUFBAU MIT EINEM MEHRTEILIGEN LAUFRING
ENSEMBLES DE PALIERS A VOIE DEDOUBLEE

(30) Priority: 02.10.1987 AU 4714/87; 10.06.1988 AU 8724/88; 13.07.1988 AU 9251/88
(43) Date of publication of application: 10.10.1990
(73) Proprietor: PLASTIC BEARINGS & HOUSINGS AUSTRALASIA PTY.LTD., Doreen, VIC 3754 (AU)
(72) Inventor: SHEEDY, Noel, Francis, Doreen, VIC 3754 (AU)
(74) Representative: Adams, William Gordon
(86) International application number: AU8800382
(87) International publication number: WO8902989

(56) References cited:
- AU-B- 1 099 943
- FR-A- 2 038 659
- GB-A- 0 567 905
- US-A- 2 029 600
- US-A- 2 814 538

## Description

The present invention relates generally to bearings and bearing assemblies including subassemblies and housings, and more particularly to bearings and bearing assemblies in which one of the bearing race members or components is split. More particularly the present invention relates to bearings having complementary mating surfaces, such as for example a male and female arrangement for locating one bearing member with respect to an other bearing member. Even more particularly, the present invention relates to a novel form of bearing which is a replacement for or a substitute for conventional ball or roller bearings.

Conventional roller or ball bearings in their many and varied forms usually consist of an inner race member which is fixedly located to a rotatable shaft, so as to rotate in accordance with corresponding rotation of the shaft, an outer race member which is fixed to a stationary element, and balls or rollers held in position by a cage or flanges or the like located intermediate the inner and outer race members. The balls or rollers provide relative rotation of the inner and outer race members with respect to each other. Usually, the side of the ball bearing or roller bearing presents cavities or depressions because of the wavy shape of the cage surrounding the balls or rollers.

One problem associated with conventional ball or roller bearings in their many forms is that when damaged or at the end of their useful life the bearings cannot be repaired in situ or in the field but must be replaced with an entirely new bearing. In many instances where the inner race is fixedly connected to a shaft, the removal of the bearing requires considerable effort, expense and equipment. The present invention, on the other hand, provides a bearing construction that allows the bearing to be completely disassembled in situ or in the field, the worn component or components may then he replaced and bearing reassembled thus obviating the need to replace the whole bearing which is costly and time consuming.

The present invention provides a bearing for a shaft, said bearing including
first bearing means in the form of a bearing sleeve adapted to be fixedly connected onto the shaft,
second bearing means rotatably mounted on said bearing sleeve, and
an outer bearing member adapted to receive and surround the outer surface of said second bearing means,
one of said first and second bearing means comprising a flange the other of said bearing means including mutually abutting annular bearing rings being disposed one on either side of said flange, each of the bearing rings including an annular recess, said recesses abut one another to form an annular groove to accommodate said flange thereby to limit relative axial movement between said first and said second bearing means whilst allowing relative rotation between said first and said second bearing means,
**characterised in that** the second bearing means has an outer surface which is convex in a direction generally parallel to the axis of the second bearing means and
said outer bearing member includes a concavely shaped inner surface complementary to the outer convex surface of said second bearing means whereby said second bearing means may pivot relative thereto to allow the bearing to align with the shaft and, when said bearing is not located on the shaft, to allow said second bearing means to be pivoted to a position with its axis substantially perpendicular with the axis of the outer bearing member, said outer bearing member including a pair of diametrically opposed slots on the inner surface thereof to allow said second bearing means and first bearing means to be removed from the outer bearing member when in said pivoted position.

US Patent No. 2 814 538 discloses a bearing construction conforming to the preamble of the foregoing statement, but lacking the features defined in the characterising passage. An example of a self aligning bearing construction is shown in FR-A-2 038 659, but here the outer bearing member is of integral construction.

Another problem associated with conventional ball or roller bearings is that all of the components are manufactured from metal and there is metal-to-metal contact between these components such as between the races and balls or rollers and between the balls or rollers and the cages. This metal-to-metal contact causes the bearing components to gall, develop flat spots, rust and the like, thus reducing the useful service life of the bearings. The present invention, on the other hand, permits the construction of a bearing or bearing assembly having one component made from a plastics material so that there is no metal-to-metal contact. A sandwich-like construction for the bearing is possible in which there are component alternately made from metal and plastics so that there is no metal-to-metal contact .

Another problem associated with previously available roller or ball bearings having a plastic component is that externally located locating means, such as for example a spaced apart pair of opposed collars must be provided for accurately locating the bearing on the shaft and to retain the bearing components in place. Usually two external collars are provided, one on either side of the bearing, to locate the outer race with respect to the inner race when on the shaft at the desired preselected position. In use of the bearing, the components frictionally slide past each other which generates heat which builds up in the bearing. As the bearing becomes hotter the components expand axially outwards and axially inwards. Since there is only minimal clearance between the external collars and the bearing, the bearing quickly expands against the collars which increases the heat generated within the bearing as the bearing rotates against the rollers which ultimately leads to the bearing seizing. In prior art bearings having a plastics component, the heat generated in some cases causes the plastics to melt thus destroying the bearing. The present invention, by being provided with an internally located locating means (the flange) which is integral with the bearing, on the other hand, does not seize when it expands due to heat build up since the recesses also expand. The internally located locating means may be separate from or form part of the bearing surface.

Another problem associated with conventional bearing, particularly those bearings having a plastics component which is fixed relative to a moving part of the bearing is that they require trained personnel to fit replacement bearings and locating means. In the field when a bearing or bearing assembly is being replaced it is a matter of judgement on the part of the serviceman to adjust the tolerances of the external collars. Too little clearance will cause the bearing to run hot thus substantially reducing their useful service life. Too much clearance will result in the bearing having too much play which leads to premature wear. Thus, the serviceman needs to adjust the locating collars to within quite limited tolerances. Embodiments of the invention, on the other hand, have the locating means machined to strict tolerances in the factory. Since there are no external locating collars required, the serviceman is not required to exercise any judgement and thus there is no element of human error in assembling or replacing the bearing in the field.

A further problem associated with conventional ball and roller bearings is that chemical, physical and biological contamination may find its way inside the bearing or assembly because conventional bearing are more or less open and have cavities, recesses and the like on exterior surfaces. Contamination in the form of dust particles, water, bacteria and the like leads to the bearing surfaces becoming rusted or corroded, which, in turn, reduces the service life of the bearings. Because the bearing surfaces of embodiments of the present invention are protected from, and not exposed to, the environment and are essentially smooth on the outside, there is a very much reduced possibility that the bearings will be contaminated.

Another problem associated with conventional bearing assemblies relates to the housings for the bearings, for example cast iron housings. Metal bearing housings develop rust, corrosion, bacterial contamination or the like within the cavities thereof during prolonged use. The development of such contaminations is undesirable in the food industry, such as in meat processing plants, dairies, pharmaceutical industries and the like, since the food product may be contaminated, which leads to premature spoilage and wastage.

The present invention permits the construction of corrosion resistant bearings, housing and components by manufacturing such articles either wholly or partially from polymeric plastics materials. In particular, plastics plummer blocks, pillow blocks, flanged housings, cylindrical flat bearings and the like may be provided.

Use of the present invention can provide commercial bearings for driver shafts and driven shafts and more particularly can permit the replacement of all-metal bearings and housings with a bearing having at least one portion made from synthetic polymeric materials or the matching up of metal bearing surfaces against bearing surfaces of plastics polymeric materials. There is no need for balls or rollers of any form located between the bearing races.

Typically, in an embodiment of the present invention the outer bearing member is moulded or fabricated from a glass-filled thermoplastic polyester resin; in another embodiment of the present invention the second bearing means (the bush), which is locatable inside the housing (outer bearing member), is moulded from the same, or a different synthetic polymeric thermoplastics resin material as the housing. The present invention also embraces a bearing in which all of the components (first and second bearing means, and outer bearing member) are made of plastics material.

The invention, according to another aspect, provides a stationary second bearing means (bush) of synthetic polymeric material for the above described bearing housing, which bush incorporates or houses a rotatable inner cylindrical sleeve (the first bearing means), typically made from a corrosion proof metal, such as stainless steel. the sleeve of this form of the present invention may be equated to the inner race of a conventional ball or roller bearing. the bush or second bearing means of the bearing of the present invention may be equated to the outer race of a conventional bearing.

The bearing of the invention can replace ball bearing races and eliminates the need for, and cost of, ball bearings, cages, roller bearings and the like. It is possible to replace cast iron bearing housings with plastic bearing housings.

Embodiments of this invention can be used as substitutes for or replacements for roller bearings and the like. In particular, a bearing assembly according to the invention and comprising mated components of metal and synthetic polymeric materials can be adapted to replace, or be interchangeable with, conventional steel-type track cam followers which use roller or needle type bearings.

Another embodiment of this present invention is a cam follower which includes a split-segment bearing bush (second bearing means) coupled upon an inner sleeve (first bearing means) assembled within an outer ring (outer bearing member) which forms a running surface member without roller or needle type bearings. The split-segment bush is retained on the flanged central or inner sleeve by a suitable fastening member.

Embodiments of this invention may also replace double ball-race type, optionally self-aligning ball bearings, the ball bearings and race being replaced by a split-segment bush/sleeve sub-assembly fitted into a flanged sleeve.

Materials from which the components of the present invention may be made are plastics, ceramics, glass, pure carbons, carbon fibres, graphite impregnated materials, kevlar, or the like including combinations thereof.

The second bearing means may be fabricated or moulded from a synthetic polymeric material or materials, such as an unreinforced, partially crystalline, thermoplastic polyester, for example polyethylene terephthalate.
Typically, the first bearing means is an inner race or a sleeve which in use is fixedly attached to a rotating element, such as a shaft for rotation therewith.

Typically, the second bearing means is an outer race or a bush which remains fixed in use.

The outer race or bush is typically a pair of annular rings formed by being radially split apart.

Typically, each ring is provided with a rebate, shoulder, recess or groove located circumferentially around the ring. More typically, the rings when in face to face relationship have their respective rebates or the like abutting one another to define a groove or the like in which a complementary shaped male member provided on the inner bearing member rotates.

In another embodiment of the present invention the outer bearing member is of a glass filled, thermoplastic polyester resin.

The outer bearing member and the second bearing means may be formed of the same or of different synthetic polymeric material.

Typically, the first bearing means is provided with the flange, which may be square, rectangular, curved, dovetailed or the like in cross-section or it may have any suitable, desirable or convenient section or combination of sections such as straight sides and a curved end. The female recess or groove is complementary to the male flange within fine tolerances since the male flange rotates in the female groove in use whereby to locate the first bearing means with respect to the second bearing means and to provide a further bearing surface.

The flange may extend to any width relative the width of the bearing from being almost the width of the bearing to being a very thin lip. The first bearing means may be made from metal or plastics material and the second bearing means may be made from metal or plastics materials. Both the first and second bearing means may be of plastics materials.

Typically, there is one, two, three, four or more flanges and a corresponding number of recesses or grooves. Typically, where more than a single flange is provided, the flanges may be of the same thickness or profile or may be of different thickness and different profiles. Preferably, the flange is a paired or double flange, each flange spaced apart from the other.

Typically, the said bearing rings may comprise two, three, four or more split rings, each of the rings being located in use in face to face relationship with each other.

Typically, the rings may be axially split in some embodiments either, such as for example as bearing shells, in place of being radically split or in addition to being radially split. Thus the rings may be annular or semicircular.

Typically, the flanges may be continuous or discontinuous having cut-outs, recesses, grooves or the like associated with them. Additionally heat dissipation means may be provided on the flanges such as fins, flutes threads or the like. One form of the heat dissipating means of the present invention is a spiral or helical groove or ridging in the side surfaces of the flange. The depth of the helical or spiral groove or ridging being very small compared to the height of the flange. Typically, the bearings of the present invention may be radial load bearings or thrust or axial load bearings.

Some examples of practical arrangements of the invention will now be described with reference to the accompanying drawings in which:
Figure 1 is a perspective exploded view of the components of one form of bearing useful for understanding the present invention;
Figure 2 is a partial cross-section taken along the line 2 to 2 of Figure 1 (transverse cross-section);
Figure 3 is a partial cross-section and partial side elevation view of the bearing components of Figures 1 and 2 assembled together to form a bearing;
Figure 4 is a perspective view of one form of the bearing of the present invention, comprising an outer bearing member or housing which may be used in conjunction with a bearing as shown in Figures 1 to 3;
Figure 5 is a front elevation of the bearing of Figure 4 showing the bearing in its normal in use position in solid lines and rotated through 90° into a position for removal from the housing shown in phantom;
Figure 6 is a cross-section view along the line 6 to 6 of Figure 5;
Figure 6a is a perspective view of one form of the outer bearing member or housing of Figures 4 to 6;
Figure 7 is a perspective view of a second embodiment of a bearing assembly according to the invention and also showing the bearing in a position rotated through 90° for removal in phantom;
Figure 8 is a cross-sectional view along the line 8 to 8 of Figure 7;
Figure 9 is a cross-sectional view of a further embodiment of the invention; and
Figure 10 is a cross-sectional view of a further embodiment of the present invention.

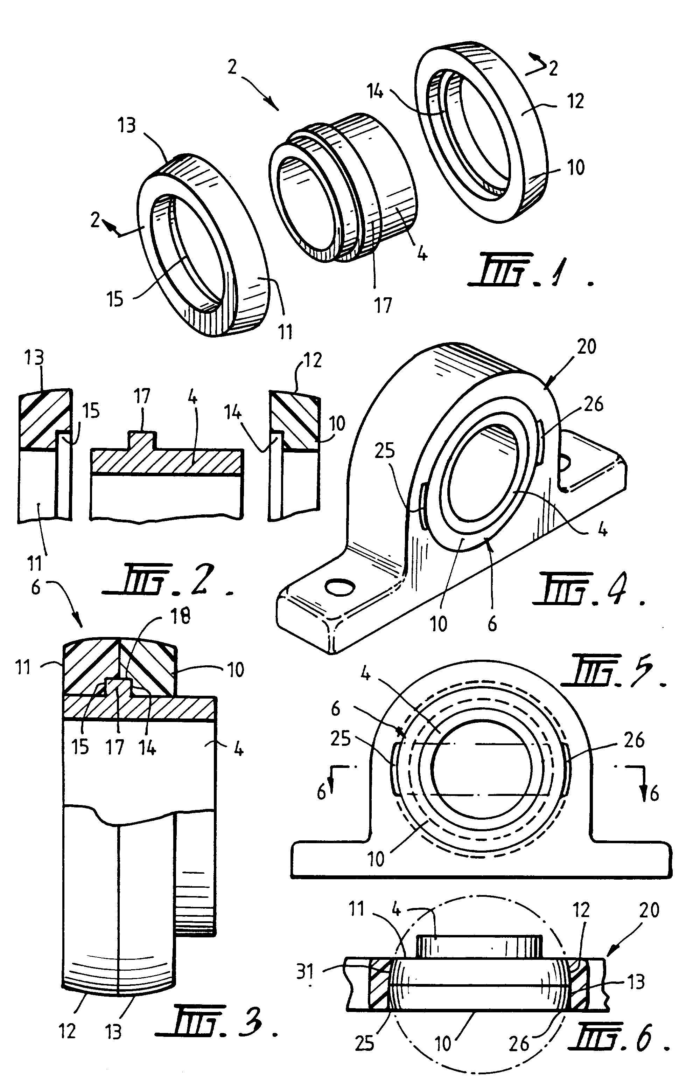

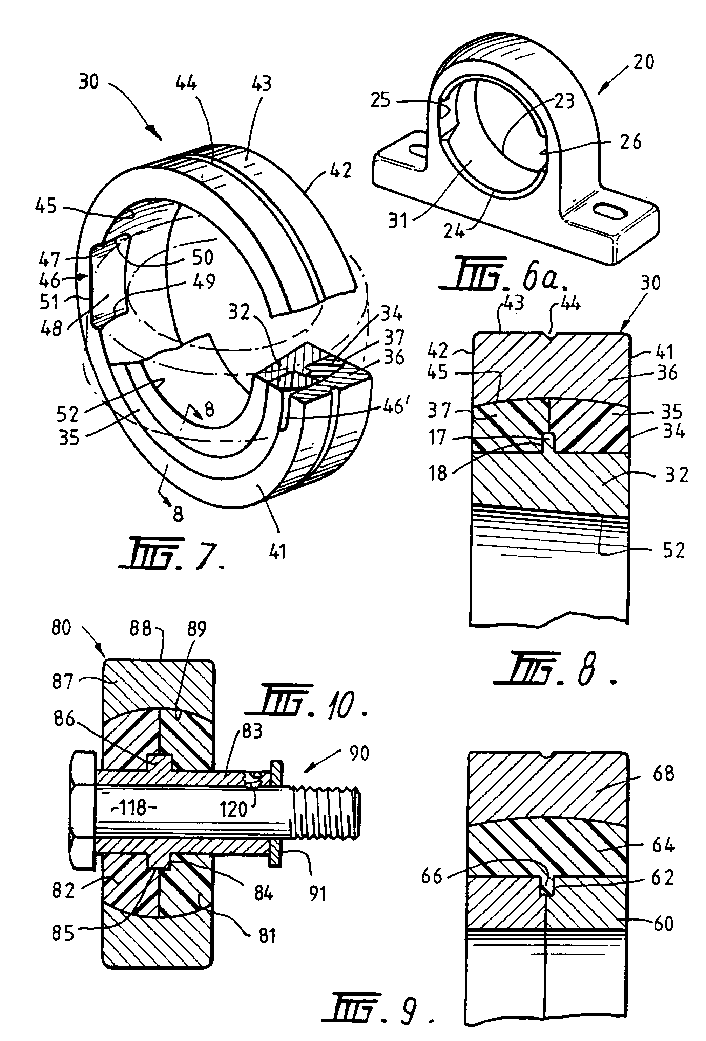

Referring to the drawings, there is shown in Figure 1 the components of a bearing 2. This bearing 2 comprises a sleeve or inner race member 4 and a bush component or outer or fixed bearing race member 6. The bush or outer bearing race member 6 comprises a split-segment bush or split ring comprising two mating segments or rings 10, 11 of synthetic polymeric, thermoplastic resin material, such as that marketed under the trade mark VESCONITE, of Vesco Plastics Pty. Ltd. However, it is to be noted that any suitable, desirable or convenient material may be used to manufacture rings 10, 11. Each ring 10, 11 has a convexly curved outer face 12, 13, respectively and an inner stepped face 14, 15 respectively. The two rings are adapted to matingly abut together in face to face relationship to form a couple which is the outer bearing race member 6 within which the rotatable bearing sleeve 4 rotates. Bearing sleeve 4 which corresponds to the inner, rotatable, first bearing race of a conventional bearing and is preferably made of stainless steel has a circumferential flange 17 located intermediate its side edges. However, it is to be noted that sleeve 4 may be made of any plastic material or metal. Flange 17 is adapted to nest within the bearing surface provided by annular groove 18 formed from the inner stepped faces 14, 15 matingly being together, located in the inboard surface of the two rings when coupled together onto the sleeve, as shown in Figure 3.

Although a square section flange or one nearly so is shown in the drawings it is to be noted that the flange may take any convenient, suitable or desirable shape such as for example square, rectangular, curved, lip-like or a combination thereof such as being straight sided with a rounded end. Of course the groove 18 formed from the stepped edges being matingly brought together will have a profile complementary to the profile of the flange. A preferred form of the flange has slightly rounded edges around the peripheral edges. Additionally, any number of flanges may be provided along the wall of sleeve 4 at regularly or irregularly spaced apart locations. Of course, a corresponding number of grooves will be formed by the split rings. Although only two split rings are illustrated it is to be noted that any number of split rings all in face to face relationship may be provided.

Referring to Figures 4 to 6 of the drawings, there is shown a bearing similar to that of Figures 1 to 3 located within a housing 20. The housing in the illustrated embodiment is in the form of a plummer block. However, the housing may take any form such as a pillow block, flange block or the like or the outer bush 6 of the bearing may in other embodiment be provided with integral fixing means to act as its own housing.

The bush 6 defined by the two split rings is provided with an outer convex surface since the outer surface of each ring 12, 13 is convexly curved with the largest external diameter located against the adjacent ring and the smallest external diameter located around the sides of the bearing. The convex outer surface of the assembled bush is designed to fit within and be retained by a complementary shaped internal concave circumferential surface 31 of the bearing housing 20. The bearing housing 20 is also moulded or fabricated of a synthetic, polymeric material such as a thermoplastic, polyester resin, preferably filled with glass or glass fibre, for example VALOX 420 grade resin made by General Electric Company. A drive or driven shaft (not shown) may then be placed through the assembled bearings.

For high speed applications a grease nipple (not shown) is optionally provided for lubricating the bearing surface.

Referring to Figures 4 to 6a of the drawings, which the bearing assembly comprises bearing housing 20, an inner race member or sleeve 4 and bush 6 The bush 6 is provided with an outer convex surface 12, 13 and is made by two symmetrical split rings 10, 11 matingly abutted together. Each of the rings outer surface is curved. The inner segmented and concave surface 31 of the bore of the bearing housing 20 has continuous peripheral edge forming a closed front wall 23 and a partly or segmented open rear wall 24 formed by a peripheral edge which is interrupted on either side in vertical arcs extending for equal distances above and below the horizontal notional centre-line through the housing to form gaps of wider bore diameter than the rest of the housing or cut-outs. The gaps or cut-outs extending laterally axially midway into the bearing to form two identical slots 25, 26 tapering in radii from top to bottom and opening to the rear face of the housing whereby the bearing and bush assembly as a unit may be removed from the housing by swivelling the bearing and bush 90° about the horizontal axis thereof as shown in phantom in Figures 5 and 6 and then moving the bearing and bush unit linearly out of the bearing via the slots, or conversely inserted into the housing, by moving the bearing bush unit linearly into the housing via the open rear wall slots while in a horizontal position. Then, turning the unit through 90° while the unit is in the housing.

With particular reference to Figures 7 and 8 a further embodiment of the present invention which is a double race bearing will now be described.

The double race bearing assembly 30 comprising the split-segment bearing bush 34 and the flanged stainless steel sleeve 32 is mounted within the outer stainless steel running surface ring 36 in a similar manner to that used to mount the bearing bush and sleeve into the plastic bearing housing shown in Figures 4 to 6 and in Figure 6a of the accompanying drawings. The inner circumferential surface 45 of the running surface ring of the present invention/modification is segmented in an angular direction and also tapered and concavely curved in the same direction. The bearing bush and sleeve assembly is mounted within the outer ring member by moving the assembly in a horizontal direction while in a horizontal position until it is inside the ring and then turning the assembly into a vertical position when inside the ring in a manner similar to that as described earlier with respect to bearing housing 20.

This modification will now be described in more detail. The ring-shaped, bearing housing 36 is made of "316" stainless steel and has identical flat side walls 41, 42, a flat outside face 43 having a central shallow circumferential groove 44 therein which extends completely around the external surface thereof. The ring 36 has a concave, internal, circumferential surface 45 interrupted by diametrically opposed radial segment bearing, bush-receiving access slots 46, 46', extending radially, partly into the internal, circumferential, concavely-curved surface of the housing. The slots are formed by portions cut-away from one side wall only of the housing and referring to one of the slots 46, the slot has its axially, inwardly boundary wall formed into a V-ramp to facilitate assembly of the convexly-curved external surface of each of the mating bearing bush segments 35, 37 which are preferably fabricated from a synthetic polymeric material such as FECHNAPLAS. The bushes 35, 37 are assembled onto the stainless steel sleeve 32 in abutment with the central, external flange 17 of the sleeve 32 by preventing the bush/sleeve bearing sub-assembly from being inserted axially too far into the housing at right angles thereto before the bush/sleeve sub-assembly is rotated 90° about its diametric axis of symmetry within the concave, walled housing and then aligned with the housing. Referring back to the housing slot 46, the slot is formed by removing an inner edge 47 of the housing and forming a flat floor 48 with curved radial side walls 49, 50, extending axially part-way into the housing and a substantially straight front edge 51.

Referring to Figure 8, the bore 52 of the sleeve may be tapered as shown, or straight - that is say cylindrical, or of uniform internal diameter in an axial direction.

In Figure 9 is shown a further embodiment in which the sleeve 60 of the bearing is provided with a circumferential groove 62 and the bush 64 is provided with a flange 66 for rotation with groove 62. In this embodiment bush 64 is split axially rather than radially and takes the form of bearing shells or the like. A housing or outer ring 68 may optionally be provided to surround bush 64.

A further embodiment of the present invention being a cam follower will now be described with reference to Figure 10. In Figure 10 is shown a cam follower bearing assembly 80 comprising a split-segment bearing bush, the two identical mating components of which are rings designated 81, 82 and which are fabricated from the same moulded or hardened synthetic polymeric material such as carbon, carbon fibre, or graphite impregnated, glass fibre or chopped strand reinforced polyester resin. Each of the rings is coupled onto a flanged cylindrical metal sleeve 83 which can be made from stainless steel via the internally stepped portions 84, 85 of the bush segments 81, 82 which fit onto the integral circumferential flange 86 of the sleeve 81. An outer, stainless steel ring 87 with external track-running surface 88 providing a track cam follower surrounds the bush. The track cam follower 87 is provided with a concavely curved inner surface 89 of complementary shape to each convex outer surface of each split-segment of the bearing bush 81, 82. The assembled bearing components of bush and sleeve after assembly within the outer ring running surface member 87 are retained together in locked configuration by a fastening member which, in this particular example is a solid, enlarged headed bolt 90 which can have the protruding shaft thereof provided with various suitable alternative fastening means thereon such as a press-fit locking member such as a washer 91 or nut or the solid shaft of the head nut can be drilled for retaining in a bearing by a grub screw or by grub screws 120, Allan screws or the like (not shown). The bolt 118 can have a plain or threaded end.

Advantages of embodiments of the present invention include that the bearings run quieter than conventional all metal bearings. The reduction in noise is particularly apparent in situations where a large number of bearings are used, such as for example in indoor conveyor systems where each roller of the conveyor system has at least two bearings. The overall reduction in noise in enclosed environments is desirable because of the health and safety problems encountered when using large numbers of all metal bearings in confined spaces.

A further advantage resides in the male/female matingly engaging means of the bearing members which is used to locate the two bearing members with respect to each other and to provide an increase in bearing surface without increasing the external dimensions of the bearing assembly.

The bearing is resistent to corrosion, rust, contamination and the like because the external surfaces are relatively smooth and the locating means and bearing surfaces, being located internally within the bearing are not exposed to the outside environment.

## Claims

1. A bearing for a shaft, said bearing including
first bearing means in the form of a bearing sleeve (4, 32, 60, 83) adapted to be fixedly connected onto the shaft,
second bearing means (6, 34, 64, 81, 82) rotatably mounted on said bearing sleeve, and
an outer bearing member (20, 36, 68, 87) adapted to receive and surround the outer surface (12, 13) of said second bearing means,
one of said first and second bearing means comprising a flange (17, 66, 86), the other of said bearing means including mutually abutting annular bearing rings (10, 11, 35, 37, 81, 82) being disposed one on either side of said flange, each of the bearing rings including an annular recess (14, 15, 84, 85), said recesses abut one another to form an annular groove (18, 62) to accommodate said flange thereby to limit relative axial movement between said first and said second bearing means whilst allowing relative rotation between said first and said second bearing means,
**characterised in that** the second bearing means has an outer surface (12, 13) which is convex in a direction generally parallel to the axis of the second bearing means and
said outer bearing member includes a concavely shaped inner surface (31, 45, 89) complementary to the outer convex surface of said second bearing means whereby said second bearing means may pivot relative thereto to allow the bearing to align with the shaft and, when said bearing is not located on the shaft, to allow said second bearing means to be pivoted to a position with its axis substantially perpendicular with the axis of the outer bearing member, said outer bearing member including a pair of diametrically opposed slots (25, 26, 46, 46') on the inner surface thereof to allow said second bearing means and first bearing means to be removed from the outer bearing member when in said pivoted position.

2. A bearing according to claim 1 wherein said first bearing means (4,32,83) includes on its outer bearing surface the annular flange (17,86) and wherein said second bearing means (6,34,81,82) includes the mutually abutting annular rings providing a groove for receiving the flange on the inner surface thereof.

3. A bearing according to claim 2 wherein the second bearing means is retained on the first bearing means by a fastening member.

4. A bearing according to claim 1 wherein said second bearing means (64) is provided with the annular flange (62) being inwardly disposed and said first bearing means (60) comprises the bearing rings, the recess being located on the outer surface of the first bearing means.

5. A bearing according to any one of the preceding claims wherein the said bearing (80) is removably mounted on said shaft (118) and adapted to be subsequently fixed thereto.

6. A bearing according to claim 5 wherein, after the first (83) and second (81,82) bearing means and the outer bearing member (87) are assembled, the fixing of the first bearing means (83) to the shaft (118) serves to prevent disassembly.

7. A bearing according to claim 5 or 6 wherein the bearing sleeve (83) protrudes from said second bearing means (81,82), the protruding portion of the sleeve being provided with fastening means (91, 120) for fixing the sleeve to the shafts (118).

8. A bearing according to any preceding claim wherein at least one of the first bearing means, the second bearing means and the outer bearing member is of plastics material.

## Patentansprüche

1. Lager für eine Welle, mit
einer ersten Lagereinrichtung in Form einer Lagerbuchse (4, 32, 60, 83), die für eine feste Verbindung auf bzw. mit der Welle angepaßt ist,
einer zweiten Lagereinrichtung (6, 34, 64, 81, 82), die drehbar auf der Lagerbuchse montiert ist, und
einem äußeren Lagerbauteil (20, 36, 68, 87), das für die Aufnahme und die Einfassung der Außenoberfläche (12, 13) der zweiten Lagereinrichtung angepaßt ist,
wobei eine der ersten bzw. zweiten Lagereinrichtungen einen Flansch (17, 66, 86) aufweist, und die andere der Lagereinrichtungen gegeneinanderstoßende ringförmige bzw. umlaufende Lagerringe (10, 11, 35, 37, 81, 82) aufweist, von denen jeweils einer auf jeweils einer Seite des Flansches angeordnet ist, wobei jeder der Lagerringe eine ringförmige Aussparung bzw. einen Absatz (14, 15, 84, 85) aufweist, und besagte Aussparungen zur Ausbildung einer Ringnut (18, 62) aneinanderstoßen, um den Flansch unterzubringen, und um dadurch die relative Axialbewegung zwischen erster und zweiter Lagereinrichtung einzugrenzen, während die Relativ-Drehbewegung zwischen erster und zweiter Lagereinrichtung zugelassen wird,
dadurch gekennzeichnet, daß
die zweite Lagereinrichtung eine Außenoberfläche (12, 13) hat, die in einer im allgemeinen zur Achse der zweiten Lagereinrichtung parallelen Richtung konvex ist, und
das äußere Lagerbauteil eine konkave Innenoberfläche (31,45,89) komplementär zur äußeren konvexen Oberfläche der zweiten Lagereinrichtung aufweist, wodurch die zweite Lagereinrichtung relativ dazu pendeln bzw. schwenken kann, um das Lager sich nach der Welle ausrichten zu lassen und, wenn das Lager nicht auf der Welle angeordnet ist, um es zu ermöglichen, daß die zweite Lagereinrichtung in eine Stellung geschwenkt wird, in der ihre Achse zur Achse des äußeren Lagerbau-teils im wesentlichen senkrecht verläuft, wobei
das äußere Lagerbauteil an seiner Innenoberfläche ein Paar diametral gegenüberliegender Schlitze bzw. Ausnehmungen (25, 26, 46, 46') aufweist, um zu ermöglichen, daß die zweite und die erste Lagereinrichtung in der geschwenkten bzw. gedrehten Position entfernt werden können.

2. Lager nach Anspruch 1, bei dem die erste Lagereinrichtung (4, 32, 83) auf ihrer äußeren Lagerfläche den ringförmigen Flansch (17, 36) aufweist, wobei die zweite Lagereinrichtung (6, 34, 81, 82) die aneinanderstoßenden umlaufenden Ringe aufweist, die eine Nut zur Aufnahme des Flansches auf ihrer Innenoberfläche davon schaffen.

3. Lager nach Anspruch 2, bei dem die zweite Lagereinrichtung auf der ersten Lagereinrichtung mittels eines Befestigungsteils zurückgehalten wird.

4. Lager nach Anspruch 1, bei dem die zweite Lagereinrichtung (64) mit einem nach innen angeordneten bzw. gerichteten ringförmigen Flansch (62) versehen ist, wobei die erste Lagereinrichtung (60) die Lagerringe aufweist und sich die Aussparung auf der Außenoberfläche der ersten Lagereinrichtung befindet.

5. Lager nach einem der vorhergehenden Ansprüche, bei dem das Lager (80) abnehmbar auf der Welle (118) angebracht und für eine nachfolgende Fixierung auf dieser angepaßt ist.

6. Lager nach Anspruch 5, bei dem, nachdem die erste (83) und zweite (81, 82) Lagereinrichtung und das äußere Lagerbauteil (87) zusammengesetzt bzw. montiert sind, die Fixierung der ersten Lagereinrichtung (83) auf der Welle (118) dazu dient, ein Auseinandernehmen zu verhindern.

7. Lager nach Anspruch 5 oder 6, bei dem die Lagerbuchse (83) von der zweiten Lagereinrichtung (81, 82) vorsteht, wobei der hervorstehende Teil der Buchse mit Befestigungseinrichtungen (91, 120) zur Fixierung der Buchse auf der Welle versehen ist (118).

8. Lager nach einem vorhergehenden Anspruch, bei dem wenigstens eine Komponente der ersten Lagereinrichtung, der zweiten Lagereinrichtung und des äußeren Lagerbauteils aus Kunststoffmaterial besteht.

## Revendications

1. Palier pour un arbre, ledit palier comprenant :
un premier moyen de palier sous la forme d'une douille de palier (4, 32, 60, 83) adaptée pour être solidarisée de l'arbre,
un deuxième moyen de palier (6, 34, 64, 81, 82) monté à rotation sur ladite douille de palier, et
un élément de palier extérieur (20, 36, 68, 87) adapté pour recevoir et entourer la surface extérieure (12, 13) dudit deuxième moyen de palier,
l'un des premier et deuxième moyens de palier comprenant une collerette (17, 66 , 86), l'autre moyen de palier comportant des bagues annulaires en butée mutuelle (10, 11, 35, 37, 81, 82) disposées, une de chaque côté de ladite collerette, chacune des bagues de palier comprenant un évidement annulaire (14, 15, 84, 85), ces évidements venant en butée l'un contre l'autre pour former une gorge annulaire (18, 62) pour y recevoir ladite collerette afin de limiter un mouvement axial relatif entre le premier et le deuxième moyen de palier tout en permettant une rotation relative entre ces premier et deuxième moyens de palier,
caractérisé en ce que le deuxième moyen de palier a une surface extérieure (12, 13) qui est convexe dans une direction sensiblement parallèle à l'axe du deuxième moyen de palier, et
ledit élément de palier extérieur comprend une surface intérieure concave (31, 45, 89) complémentaire de la surface convexe extérieure dudit deuxième moyen de palier, d'où il résulte que ce deuxième moyen de palier peut pivoter par rapport à l'élément de palier extérieur pour permettre au palier de s'aligner avec l'arbre et, lorsque ledit palier n'est pas positionné sur l'arbre, pour permettre au deuxième moyen de palier de pivoter jusqu'à une position dans laquelle son axe est pratiquement perpendiculaire à l'axe de l'élément de palier extérieur, ledit élément de palier extérieur comprenant deux encoches diamétralement opposées (25, 26, 46, 46') sur sa surface intérieure pour permettre d'enlever lesdits deuxième moyens de palier et premier moyens de palier de l'élément de palier extérieur lorsque le deuxième moyen de palier est dans cette position pivotée.

2. Palier selon la revendication 1, dans lequel ledit premier moyen de palier (4, 32, 83) comprend sur sa surface portante extérieure la collerette annulaire (17, 36) et dans lequel le deuxième moyen de palier (6, 34, 81, 82) comprend les bagues annulaires en butée mutuelle formant une gorge pour recevoir la collerette sur sa surface intérieure.

3. Palier selon la revendication 2, dans lequel le deuxième moyen de palier est retenu sur le premier moyen de palier par un élément de fixation.

4. Palier selon la revendication 1, dans lequel ledit deuxième moyen de palier (64) est pourvu de la collerette annulaire (62) disposée vers l'intérieur et ledit premier moyen de palier (60) comprend les bagues de palier, l'évidement étant situé sur la surface extérieure du premier moyen de palier.

5. Palier selon l'une quelconque des revendications précédentes, dans lequel ledit palier (80) est monté de façon amovible sur l'arbre (118) et est adapté pour être ensuite fixé sur lui.

6. Palier selon la revendication 5, dans lequel, après assemblage du premier (83) et du deuxième (81, 82) moyens de palier et de l'élément de palier extérieur (87), la fixation du premier moyen de palier (83) sur l'arbre (118) sert à empêcher le démontage.

7. Palier selon la revendication 5 ou la revendication 6, dans lequel la douille de palier (83) dépasse du deuxième moyen de palier (81, 82), la portion saillante de la douille étant pourvue de moyens de fixation (91, 120) pour fixer la douille sur l'arbre (118).

8. Palier selon l'une des revendications précédentes, dans lequel au moins l'un du premier moyen de palier, du deuxième moyen de palier et de l'élément de palier extérieur est en matière plastique
